# EUROPÄISCHE PATENTSCHRIFT

(11) **EP 2 238 575 B1**
(45) Veröffentlichungstag und Bekanntmachung des Hinweises auf die Patenterteilung: **26.04.2017**
(21) Anmeldenummer: 09706596.5
(22) Anmeldetag: 26.01.2009
(51) Int. Cl.: G07C 9/00, G06K 9/00

(54) **VERFAHREN UND VORRICHTUNG ZUR ÜBERWACHUNG EINES RAUMVOLUMENS**
METHOD AND SYSTEM FOR MONITORING THE SPACE IN A ROOM
PROCÉDÉ ET SYSTÈME POUR LA SURVEILLANCE DU VOLUME D'UN LOCAL

(30) Priorität: 29.01.2008 DE 102008006449
(43) Veröffentlichungstag der Anmeldung: 13.10.2010
(73) Patentinhaber: Kaba Gallenschütz GmbH, 77815 Bühl (DE)
(72) Erfinder: OBERLE, Gerhard, 76473 Iffezheim (DE)
(74) Vertreter: Geitz Truckenmüller Lucht Christ
(86) Internationale Anmeldenummer: PCT/DE2009/075002
(87) Internationale Veröffentlichungsnummer: WO 2009/095014

(56) Entgegenhaltungen:
- WO-A1-2007/138025
- US-A1- 2004 017 929
- US-A1- 2005 249 382
- US-A1- 2007 268 145

## Beschreibung

Die Erfindung betrifft ein Verfahren und eine Vorrichtung zur Überwachung eines Raumvolumens umfassend einen Matrix-Entfernungs-Mess-Sensor mit einer Emittereinheit zum Aussenden von Strahlungsimpulsen sowie einer Mehrzahl von Sensoren zum Empfang von Reflexionen dieser Strahlungsimpulse, welcher bezüglich des zu überwachenden Raumvolumens derart angeordnet ist, dass aufgrund der empfangenen Reflexionen jeweils Bildinformationen und ein zusätzliches, dreidimensionales Raumbild erstellbar sind.

Ein Verfahren ähnlicher Art ist bereits aus der US-Patentanmeldung 2005/0249382 A1 vorbekannt. Das genannte amerikanische Schutzrecht betrifft eine Durchgangsschleuse, welche eine Außen- und eine Innentür umfasst. Im Bereich beider Türen ist jeweils innerhalb der Durchgangschleuse ein zu überwachender Bereich vorgesehen, wobei jeder dieser Bereiche von einem Kamerapaar überwacht wird. Jedes der genannten Kamerapaare hat den von ihm zu überwachenden Bereich im Sichtfeld und ist dazu ertüchtigt, von dem zu überwachenden Bereich ein dreidimensionales Modell zu berechnen. Zur Überwachung des Durchgangs durch die Durchgangsschleuse wird zunächst geprüft, ob eine Person sich im zu überwachenden Bereich vor der Außentür befindet. Sobald dies der Fall ist, wird gleichzeitig geprüft, ob wiederum eine Person sich im zu überwachenden Bereich vor der Innentür aufhält. Demgemäß wird bei einem Einlassbetrieb die Außentür nur dann zur Öffnung freigegeben, wenn sich keine Personen in den zu überwachenden Bereichen aufhalten, die Innentür, welche zu dem zu sichernden Bereich führt, wird nur dann zur Öffnung freigegeben, wenn sich genau eine Person in dem zu überwachenden Bereich aufhält.

Mithilfe der Kamerapaare werden jeweils zwei zweidimensionale Bilder der zu überwachenden Bereiche angefertigt, mittels derer die sich in dem Bereich aufhaltenden Elemente durch Bestimmung dreidimensionaler Raumpunkte ermitteln lassen. Durch einen Vergleich der auf diese Weise bestimmten dreidimensionalen Elemente mit vorab eingespeicherten Modellen wird im folgenden bestimmt, ob sich eine Person in dem zu überwachenden Bereich befindet.

Das vorbeschriebene Verfahren basiert im wesentlichen darauf, dass zwei getrennte Bereiche mithilfe von dreidimensionalen Bilderfassungssystemen überwacht werden und die Türen der so realisierten Durchgangsschleuse anhand der entsprechenden Informationen gesteuert werden können. Der wesentliche Sinn des Verfahrens besteht vornehmlich darin, zu vermeiden, dass die gesicherte Seite der Durchgangsschleuse nach einer Freigabe derselben für eine Person schließlich gleichzeitig von mehreren Personen betreten wird. Eine mit einer ersten Person "Huckepack" eintretende zweite Person soll aufgrund des erstellten dreidimensionalen Bildes eines jeden Bereichs vorab erkannt werden. Hierzu ist eine Anordnung der jeweiligen Kamerapaare im Bereich oberhalb der Türen der Durchgangsschleuse vorgesehen, so dass eine etwa hinter einer ersten Person stehende zweite Person gleichzeitig von dem Kamerapaar erfasst werden kann.

Trotz dieser vorteilhaften Anordnung existieren jedoch im Schattenbereich der ersten Person nach wie vor Raumpunkte, die von dem jeweiligen Kamerapaar nicht eingesehen werden können. In diesem Bereich können sich jedoch ebenfalls Elemente aufhalten, welche mit Vorteil von der Überwachung erfasst werden sollten.

Zudem stellt die Berechnung von dreidimensionalen Modellen aus der Überlagerung mehrerer zweidimensionaler Bilder eines Kamerapaars eine sehr große Anforderung an die hierfür vorzusehende Rechenhardware dar, welche im Bezug auf die Herstellung einer derart realisierten Durchgangsschleuse einen wesentlichen Kostenpunkt darstellt.

Vor diesem Hintergrund liegt der vorliegenden Erfindung die Aufgabe zu Grunde, ein Verfahren und eine Vorrichtung zur Überwachung eines Raumvolumens zu schaffen, mithilfe derer eine Überwachung eines Raumvolumens weiter verbessert und trotz dieser verbesserten Ergebnisse technisch vereinfacht ist.

Dies gelingt mittels einer Vorrichtung zur Überwachung eines Raumvolumens gemäß den Merkmalen des Anspruchs 1, sowie durch ein Verfahren zur Überwachung eines Raumvolumens gemäß den Merkmalen des nebengeordneten Anspruchs 11. Weitere Ausgestaltungen der Vorrichtung und des Verfahrens können den jeweiligen Unteransprüchen entnommen werden.

Erfindungsgemäß sind oberhalb eines zu überwachenden Raumvolumens mehrere Matrix-Entfernungs-Mess-Sensoren, vorzugsweise in Form von Time Of Flight- (TOF-) Kameras, angeordnet. Diese TOF-Kameras zeichnen sich jeweils dadurch aus, dass sie in Verbindung mit den üblichen Bildinformationen eine zusätzliche 3D-Darstellung des überwachten Raumvolumens erzeugen. Dies hat den Vorteil, dass eine Überwachung gegebenenfalls auch mit einer einzigen derartigen TOF-Kamera möglich ist.

Hierzu ist der TOF-Kamera ein geeigneter Sensor zugeordnet, der die Reflexion von einer Emittereinheit in den zu überwachenden Raum ausgesandter Strahlung und deren Laufzeit erfasst. Aufgrund der Strahlungslaufzeit kann dann auf die Oberfläche der in dem zu überwachenden Raum angeordneten Objekte geschlossen werden.

In weiterer Konkretisierung dieser Ausgestaltung ist jeder TOF-Kamera als Sensor ein CMOS/CCD-Bildsensor zugeordnet. Mit diesem Sensor werden die von einer, vorzugsweise als Beleuchtungseinheit ausgeführten, Emittereinheit der TOF- Kamera auf ein zu erfassendes Objekt eingestrahlten Impulse erfasst, sobald sie von dem angestrahlten Objekt reflektiert werden. Auf diese Weise wird dann, wahlweise pixelgenau, eine exakte Lichtlaufzeit von der Ausstrahlung des Lichtimpulses bis zur Erfassung des reflektierten Lichtimpulses durch den CMOS/CCD Bildsensor ermittelt. Aufgrund der bekannten Lichtgeschwindigkeit und der bekannten Position der Beleuchtungseinheit und des CMOS/CCD Bildsensors innerhalb des überwachten Raumvolumens, sowie der ebenfalls bekannten Abmessungen des Raumvolumens selbst, kann dann aus der Lichtlaufzeit exakt die Position eines jeden Bildpunktes in dem überwachten Raum ermittelt werden.

Alternativ können in Kombination mit einer korrelierenden Sendeeinheit auch Ultraschall-, Laser- oder Infrarotsensoren, wahlweise auch in beliebiger Kombination, zur Erfassung einer dreidimensionalen Oberfläche eingesetzt sein.

Es handelt sich dabei also im Ergebnis um ein Abtasten der Oberfläche der zu erfassenden Objekte, die in etwa dem Ultraschall-Bild einer Fledermaus in Erstellung und Ergebnis entspricht. In beiden Fällen wird jeweils ein hoch aufgelöstes, dreidimensionales Abbild der Umwelt erstellt.

Moderne TOF-Kameras können dabei hoch auflösende 3-D-Darstellungen in Videogeschwindigkeit mit hoher Präzision erstellen. Es kann dabei eine Distanzauflösung von deutlich unter einem Zentimeter erreicht werden.

Das zu überwachende Raumvolumen kann zumindest einseitig räumlich begrenzt sein, etwa durch eine Absperrung oder durch eine Wand, so dass auf diese Weise die Positionierung der im zu überwachenden Raumbereich vorhandenen Objekte vereinfacht ist. Wäre die Positionierung der genannten Objekte völlig frei wählbar, so müsste ein wesentlich größerer Bereich überwacht werden. Auch durch entsprechende Markierungen, etwa durch Anzeichnungen auf dem Boden, wäre ein zu überwachender Bereich ohne weiteres abgrenzbar.

Solcherlei Begrenzungen fallen mit besonderem Vorteil zumindest weitgehend mit den Grenzen des Sichtbereichs der Kameras zumindest jeweils einseitig zusammen. Umgekehrt bedeutet dies, dass die Sichtbereiche der Kameras wenigstens einseitig an den Begrenzungen des zu überwachenden Raums enden. Hierdurch wird gewährleistet, dass die Kameras möglichst wenig redundante Informationen, wie etwa Informationen über die Wandung des Raumbereichs oder außerhalb des zu überwachenden Bereichs liegende Objekte zu verarbeiten haben.

Ebenfalls ist es von Vorteil, wenn wenigstens einseitig eine dem Kamerapaar gegenüberliegende Raumbegrenzung oberhalb einer vorgebbaren Kopfhöhe von der Sichtgrenze geschnitten wird. Hierdurch soll bewirkt werden, dass selbst große Personen, welche in den zu überwachenden Raumbereich eintreten, noch vollständig von den Kameras erfasst werden, selbst wenn sie im ungünstigsten Falle direkt an einer der Außenbegrenzungen des Bereichs stehen.

Der vorbeschriebenen Vorrichtung ist erfindungsgemäß eine Rechnerhardware und/oder eine Rechnersoftware zugeordnet, mithilfe derer eine Digitalisierung der Kameradaten vorgenommen werden kann. Aufgrund dieser digitalisierten Daten können nachfolgend die dreidimensionalen Raumbilder berechnet werden, auf deren Basis die Bestimmung eines Höhenprofils durchgeführt werden kann.

Mit Vorteil ist die vorbeschriebene Anordnung einer Personenschleuse derart zugeordnet, dass innerhalb des Schleusenbereichs befindliche Personen und/oder Gegenstände mithilfe der Kameradaten erfassbar und erkennbar sind. Durch den Vergleich des erstellten Höhenprofils mit Modellen aus einer Modellbibliothek kann entschieden werden, ob zu einem Zeitpunkt lediglich eine oder doch mehrere Personen durch die Personenschleuse hindurchtreten, so dass eine etwa erforderliche Personenvereinzelung durch die erfindungsgemäße Vorrichtung unterstützt werden kann.

Zur Kalibrierung der jeweiligen TOF-Kamera oder -Kameras, welche zur Überwachung des Raumvolumens eingesetzt werden, ist mit Vorteil vorgesehen, zunächst eine Laborkalibrierung der inneren Abbildungsparameter vorzunehmen. Das Verfahren benötigt als innere Abbildungsparameter lediglich die Kammerkonstante und die radiale Linsenverzeichnung. Dieser Laborkalibrierung wird zunächst für die einzelnen Kameras durchgeführt. Vor Ort, das heißt also nach einem Anbringen der TOF-Kamera oder -Kameras in einem zu überwachenden Raumbereich, wird zur Kalibrierung der äußeren Orientierung der TOF-Kamera oder -Kameras zunächst für jede der Kameras eine Homographie bestimmt, welche eine Abbildung der von der Kamera aufgenommenen Bildpunkte auf eine Referenzebene darstellt. Die Referenzebene wird im zu überwachenden Raum in geeigneter Weise ausgewählt. Dieser Schritt wird für jede weitere TOF-Kamera mit zur ersten, vorzugsweise parallelen, weiteren Referenzebenen entsprechend durchgeführt. Als letzter Kalibrierungsschritt wird für jede TOF-Kamera eine Epipolargeometrie erstellt, mit deren Hilfe jedem von den Kameras erfassten Raumpunkt ein Höhenwert zugeordnet werden kann.

In einem nächsten Schritt werden die TOF-Kamera oder -Kameras vor Ort angeordnet und wiederum vorkalibriert. Diese erste Vor-Ort-Kalibrierung erfordert zunächst die Einführung einer Referenzebene, sowie einer vorzugsweise zur Referenzebene parallel liegende Hilfsebene. Die Referenzebene wird vorzugsweise durch eine Anordnung zueinander rechtwinklig situierter Markierungen bestimmt, deren Positionen im Raum vorbekannt sind. Durch einen Vergleich der Kamerabilder mit der realen Anordnung auf der Referenzebene wird eine Abbildungsvorschrift zur Abbildung der Referenzebene auf den jeweiligen Kameras, eine so genannte Homographie, bestimmt. Eine solche Homographie wird für jede TOF-Kameras ermittelt. Die so erhaltenen Parameterwerte der Homographien werden für die Verwendung im Auswertezyklus der jeweils aktuellen Kamerabilder abgespeichert.

Mit Vorteil wird als Referenzebene die Bodenfläche des zu überwachenden Raumvolumens definiert.

Die kalibrierte bzw. kalibrierten TOF-Kamera bzw. -Kameras nimmt/nehmen mit Vorteil an dem erfindungsgemäßen Verfahren zur Überwachung eines Raumvolumens teil. Im Bereich eines zu überwachenden Raumvolumens wird dazu eine Mehrzahl solcher TOF-Kameras derart angeordnet, dass das zu überwachende Raumvolumen von den verschiedenen TOF-Kameras aus unterschiedlichen Raumrichtungen betrachtet wird. Die dreidimensionalen Raumbilder jeder TOF-Kamera werden gemeinsam so ausgewertet, dass die aufgrund von Schattenwürfen nicht darstellbare Raumpunkte jeweils mithilfe von Raumbildern anderer TOF-Kameras ergänzt werden. Hierdurch kann der Raum auch in den abgeschatteten Bereichen zuverlässig überwacht werden und etwaige Winkelfehler nur einer TOF-Kamera durch den jeweils anderen Blickwinkel einer weiteren TOF-Kamera korrigiert werden.

Zur Handhabung der jeweiligen Videodaten werden die von den einzelnen TOF-Kameras stammenden Videodatenströme digitalisiert und entsprechender Rechenhardware und/oder Rechensoftware zugeführt.

Die Kamerabilder der einzelnen Kameras werden aufgrund von Kalibrierdaten korrigiert, erst die solchermaßen korrigierten Kamerabilder werden der weiteren Berechnung zu Grunde gelegt. Die weitere Berechnung sieht dabei vor, ein dreidimensionales Raumbild des Sichtbereichs der jeweiligen Kamerapaare zu erstellen, wonach für jeden Raumpunkt ein Höhenwert berechnet und auf diese Weise ein Höhenprofil des überwachten Raumes bestimmt wird.

Im Anschluss an die Ermittlung des aus den derart gewonnenen Höhenwerten der einzelnen Raumpunkte bestehenden Höhenprofils wird dieses mit in einer Modellbibliothek gespeicherten Standardmodellen verglichen. Diese Standardmodelle werden in das Höhenprofil eingesetzt und geprüft, ob das Höhenprofil zumindest einem der vorgegebenen Modelle entspricht. Soweit dies der Fall ist, wird das dem Modell entsprechende Objekt als erkannt betrachtet. In Weiterführung dieses Verfahrens wird nachfolgend geprüft, ob sich weitere Standardmodelle in dem verbleibenden Raum des Höhenprofils einfügen lassen. In der konkreten Anwendung, etwa als Durchgangsschleuse zur Personenvereinzelung, ließe sich diese Anwendung dahingehend erweitern, dass bei der Erkennung von mehr als einem Objekt ein Alarm beziehungsweise eine Sperrung der Durchgangsschleuse bewirkt wird.

Der Einsatz der Standardmodelle kann dadurch weiter verbessert werden, dass die mittels der TOF-Kameras zur Erkennung eines Höhenprofils ermittelte dreidimensinale Punktwolke einer Konturerkennung übermittelt wird, die zunächst eine Konturerkennung vorbestimmter menschlicher Körperpartien, etwa des Kopfes der Schulter oder der Arme vornimmt und somit eine erste Objekterkennung und deren Anzahl vornimmt. Hierdurch kann eine Plausibilitätskontrolle, etwa der ermittelten Personenzahl realisiert werden.

Die vorstehend beschriebene Erfindung wird im folgenden anhand eines in der Zeichnung dargestellten Ausführungsbeispiels näher erläutert.

Es zeigt:

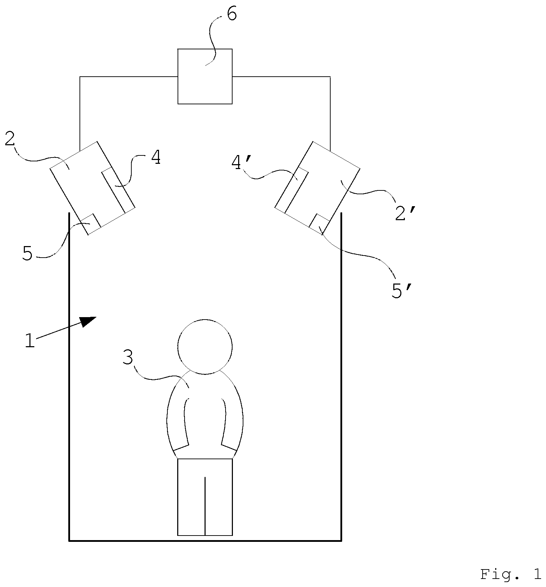

- Figur 1: eine erfindungsgemäße Vorrichtung mit einem abgegrenzten, zu überwachenden Raumvolumen in einer seitlichen Draufsicht.

Figur 1 zeigt ein zu überwachendes Raumvolumen 1, welches von zwei TOF-Kameras 2, 2' überwacht wird. Dabei sind die Kameras derart geneigt, dass sich die äußersten Sichtstrahlen der beiden Kameras 2, 2' im Bereich der jeweils gegenüberliegenden Wand in einer Höhe schneiden, die höher ist, als die Kopfhöhe einer etwa in dem zu überwachenden Raumvolumen 1 befindlichen Person 3.

Durch die Anordnung des Kamerapaars 2, 2' ist gewährleistet, dass sich in dem von der Person 3 abgeschatteten Bereich kein weiteres Objekt bzw. keine weitere Person befinden kann.

Dabei erzeugt jede der dem jeweils zu überwachenden Raumvolumen zugeordneten TOF-Kameras 2, 2' ein dreidimensionales Raumbild, mit dessen Hilfe ein Höhenprofil des zu überwachenden Raumvolumens 1 bestimmt werden kann. Soweit die Raumpunkte des Raumvolumens 1 von einer TOF-Kamera 2 oder 2' nicht erfasst werden können, wird für die nicht einsehbaren Raumpunkte auf das von der anderen Kamera 2' oder 2 bereitgestellte dreidimensionale Raumbild zurückgegriffen. Das auf diese Weise vervollständigte Höhenprofil des zu überwachenden Raumvolumens 1 wird anschließend mit Standardmodellen verglichen, welche in einer Modellbibliothek vorgehalten werden. Es werden so lange Standardmodelle in das Höhenprofil eingefügt, bis festgestellt werden kann, welche Objekte sich in dem zu überwachenden Raumvolumen 1 befinden.

Die TOF-Kameras 2, 2' besitzen in dem hier ausgeführten Ausführungsbeispiel jeweils eine Beleuchtungseinheit 4, 4', mit der Lichtimpulse in den zu überwachenden Raum 1 emittiert werden, wobei die eingestrahlten Lichtimpulse von den Wänden des Raumvolumens 1 ebenso wie von etwa in dem Raum angeordneten Objekten, hier einer Person 3, reflektiert werden. Die reflektierten Lichtimpulse werden von einem der Kamera 2, 2' ebenfalls zugeordneten Bildsensor, vorzugsweise einem CMOS/CCD-Bildsensor 5, 5', aufgefasst. Um eine wechselseitige Beeinflussung der beiden Kameras 2, 2' bzw. der Bildsensoren 5, 5' zu vermeiden, können die Lichtimpulse der beteiligten Kameras 2, 2' zeitversetzt emittiert werden. Aus den in Verbindung mit den reflektierten Impulsen ermittelten Lichtlaufzeiten kann dann mittels einer jeden TOF-Kamera 2, 2' ein Höhenprofil des zu überwachenden Raumvolumens 1 ermittelt werden.

Etwaige Blickwinkelfehler der beteiligten TOF-Kameras können durch die Zusammenschau der von jeder der beiden Kameras 2, 2' entwickelten Höhenprofile und deren Abgleich über eine den beiden TOF-Kameras gemeinsam zugeordneten Rechnereinheit 6 korrigiert werden. In dieser Rechnereinheit 6 sind auch die vorstehend erwähnten Standardmodelle als Vergleichsnormale angelegt.

Ergänzend zu den Standardmodellen zur Erkennung von Personen bzw. der Anzahl der in dem zu überwachenden Raumvolumen befindlichen Personen 3 kann den TOF-Kameras 2, 2', die neben dem ermittelten Höhenprofil eine herkömmliche Bildinformation liefern, eine Bildauswertung derart zugeordnet sein, dass eine Konturerkennung anhand der Bildinformation und/oder anhand der ermittelten Höheninformation durchgeführt wird. Hierdurch können besonders markante Körperpartien, wie etwa Kopf, Schulterbereich oder Arme, erkannt werden und anhand dieser Erkennung auf die Anzahl der in dem zu überwachenden Raumvolumen 1 angeordneten Personen 3 geschlossen werden.

Alternativ oder ergänzend zu den genannten CMOS/CCD-Bildsensoren 5, 5' kann auch mittels anderer Sensoren, etwa einem Ultraschallsensor, einem Lasersensor oder einem Infrarotsensor, ein dreidimensionales Höhenbild erzeugt werden.

Vorstehend sind somit ein Verfahren sowie eine Vorrichtung zur Überwachung eines Raumvolumens offenbart, welche in der Anwendung den Vorteil aufweisen, dass eine vollständige Überwachung des Raumvolumens gewährleistet werden kann, während gleichzeitig eine vereinfachte Vorgehensweise zur Erlangung der dreidimensionalen Informationen gelehrt wird.

### BEZUGSZEICHENLISTE

- 1: Raumvolumen
- 2, 2': TOF-Kamera
- 3: Person
- 4, 4': Beleuchtungseinheit
- 5, 5': CMOS/CCD-Bildsensor
- 6: Rechnereinheit

## Patentansprüche

1. Vorrichtung zur Überwachung eines Raumvolumens (1) umfassend einen Matrix-Entfernungs-Mess-Sensor mit einer Emittereinheit zum Aussenden von Strahlungsimpulsen sowie einer Mehrzahl von Sensoren zum Empfang von Reflexionen dieser Strahlungsimpulse, welcher bezüglich des zu überwachenden Raumvolumens (1) derart angeordnet ist, dass aufgrund der empfangenen Reflexionen Bildinformationen und ein zusätzliches, dreidimensionales Raumbild erstellbar sind, wobei der Vorrichtung eine Rechnerhardware und/oder Rechnersoftware zugeordnet ist, welche zur Digitalisierung von Sensordaten, sowie zur Erstellung eines Höhenprofils des zu überwachenden Raumvolumens (1) über einer Referenzebene auf Basis dieser Sensordaten, ertüchtigt ist,
**dadurch gekennzeichnet, dass** zusammen mit wenigstens einem zusätzlichen Matrix-Entfernungs-Mess-Sensor eine Überdeckung des Raumvolumens von mehreren Seiten ermöglicht ist, das auf Basis der Daten der zumindest zwei Sensoren über der Referenzebene erstellte Höhenprofil mithilfe der Rechnerhardware und/oder Rechnersoftware mit Standardmodellen, etwa einer Durchschnittsperson (3), vergleichbar ist und die Vorrichtung ausgelegt ist, nach der Erkennung eines Standardmodells zu prüfen, ob ein weiteres Standardmodell, etwa einer weiteren Durchschnittsperson (3), im verbleibenden Raum einfügbar ist.

2. Vorrichtung nach Anspruch 1, **dadurch gekennzeichnet, dass** die Strahlungsimpulse von wenigstens einem Objekt innerhalb des Raumvolumens (1), vorzugsweise wenigstens einer Person (3), reflektierbar sind und dass eine Berechnung der Objektkonturen aus den jeweiligen individuellen Laufzeiten der Strahlungsimpulse von der Emission durch die Emittereinheit bis zur Erfassung des reflektierten Strahlungsimpulses durch eine angeschlossene Rechnereinheit (6) ermöglicht ist.

3. Vorrichtung nach einem der vorhergehenden Ansprüche, **dadurch gekennzeichnet, dass** als Matrix-Entfernungs-Mess-Sensoren 3D-Time-of-Flight-Kameras, im Weiteren TOF-Kameras (2, 2') genannt, eingesetzt sind.

4. Vorrichtung nach Anspruch 3, **dadurch gekennzeichnet, dass** als Sensoren CMOS/CCD-Bildsensoren (5, 5') vorgesehen sind, mit deren Hilfe von einer als Beleuchtungseinheit (4, 4') ausgeführten Emittereinheit einer jeden TOF-Kamera (2, 2') ausgestrahlte und von etwa beleuchteten Objekten innerhalb des Raumvolumens (1), vorzugsweise Personen (3), reflektierte Lichtimpulse, erfasst und deren jeweilige individuelle Lichtlaufzeit von der Ausstrahlung des Lichtimpulses mittels der Beleuchtungseinheit (4, 4') bis zur Erfassung des reflektierten Lichtimpulses durch den CMOS/CCD-Bildsensor (5, 5'), vorzugsweise pixelgenau, feststellbar ist.

5. Vorrichtung nach einem der vorhergehenden Ansprüche, **dadurch gekennzeichnet, dass** jeder Matrix-Entfernungs-Mess-Sensor einen Infrarotsensor und/oder einen Lasersensor und/oder einen Ultraschallsensor aufweist, mit dessen Hilfe von der Emittereinheit eines jeden Matrix-Entfernungs-Mess-Sensors ausgestrahlte und von dem/den Objekt/en innerhalb des Raumvolumens (1), vorzugsweise Personen (3), reflektierte Impulse, erfasst und deren jeweilige individuelle Laufzeit von der Ausstrahlung des Impulses mittels der Emittereinheit bis zur Erfassung des reflektierten Impulses durch den Infrarot-, Laser- und/oder Ultraschallsensor, vorzugsweise pixelgenau, feststellbar ist.

6. Vorrichtung nach einem der Ansprüche 1 bis 5, **dadurch gekennzeichnet, dass** das zu überwachende Raumvolumen (1) wenigstens einseitig räumlich begrenzt, etwa von zumindest einer Wand und/oder zumindest einer Absperrung abgegrenzt oder eingeschlossen ist.

7. Vorrichtung nach einem der vorhergehenden Ansprüche, **dadurch gekennzeichnet, dass** der Sichtbereich des wenigstens einen Matrix-Entfernungs-Mess-Sensors derart ausgerichtet ist, dass die Grenzen des Sichtbereichs wenigstens einseitig zumindest weitgehend parallel zur Begrenzung des zu überwachenden Raumvolumens (1) verlaufen.

8. Vorrichtung nach einem der vorhergehenden Ansprüche, **dadurch gekennzeichnet, dass** der Sichtbereich des wenigstens einen Matrix-Entfernungs-Mess-Sensors derart ausgerichtet ist, dass die Grenzen des Sichtbereichs wenigstens einseitig eine dem jeweiligen Matrix-Entfernungs-Mess-Sensor gegenüberliegende Raumbegrenzung oberhalb einer vorgebbaren Kopfhöhe schneiden.

9. Vorrichtung nach einem der vorhergehenden Ansprüche, **dadurch gekennzeichnet, dass** im Sichtfeld zumindest einer der Matrix-Entfernungs-Mess-Sensoren eine Spiegelanordnung angeordnet ist.

10. Personenschleuse, welcher eine Vorrichtung nach einem der vorhergehenden Ansprüche derart zugeordnet ist, dass innerhalb des Schleusenbereichs befindliche Personen (3) und/oder Gegenstände mithilfe der wenigstens zwei Matrix-Entfernungs-Mess-Sensoren erfassbar sind.

11. Verfahren zur Überwachung eines Raumvolumens (1) mithilfe einer TOF-Kamera (2, 2'), welche das Raumvolumen (1) überblickt und aus deren Kamerabildern ein dreidimensionales Raumbild erstellbar ist,
**dadurch gekennzeichnet, dass** eine zweite TOF-Kamera (2, 2') das Raumvolumen ebenfalls so überblickt, dass in dem jeweiligen Raumbild einer TOF-Kamera (2, 2') aufgrund von Schattenwürfen nicht erfassbare Raum- und/oder Objektpunkte mithilfe von Raumbildern der jeweils anderen TOF-Kamera (2, 2') ergänzt werden, so dass aufgrund der Raumbilder einer Mehrzahl von TOF-Kameras (2, 2') unter Zusammenfügung der Daten verschiedener TOF-Kameras (2, 2') zu einem einzigen Raumbild ein möglichst vollständiges Höhenprofil des zu überwachenden Raumvolumens (1) bestimmt wird, das erstellte Höhenprofil mit Standardmodellen, etwa einer Durchschnittsperson (3), verglichen wird und nach der Erkennung eines Standardmodells geprüft wird, ob ein weiteres Standardmodell, etwa einer weiteren Durchschnittsperson (3), im verbleibenden Raum einfügbar ist.

12. Verfahren nach Anspruch 11, **dadurch gekennzeichnet, dass** die von den einzelnen TOF-Kameras (2, 2') stammenden Videodatenströme digitalisiert werden.

13. Verfahren nach einem der Ansprüche 11 oder 12, **dadurch gekennzeichnet, dass** die Kamerabilder der einzelnen TOF-Kameras (2, 2') aufgrund von Kalibrierwerten jeweils korrigiert werden.

14. Verfahren nach einem der Ansprüche 11 bis 13, **dadurch gekennzeichnet, dass** für eine Mehrzahl von TOF-Kameras (2, 2') jeweils ein einzelnes gemeinsames dreidimensionales Raumbild des von den jeweiligen TOF-Kameras (2, 2') einsehbaren Raumbereichs erstellt wird.

15. Verfahren nach einem der Ansprüche 11 bis 14, **dadurch gekennzeichnet, dass**, im Zusammenhang mit der Auswertung der erstellten Höhenprofile, zusätzlich oder alternativ eine Konturauswertung zur Erkennung definierter Körperbereiche von Personen(3), etwa des Kopf-, Schulter- oder Armbereichs, vorgenommen werden.

## Claims

1. A system for monitoring a spatial volume (1), comprising a matrix distance measurement sensor having an emitter unit for emitting radiation-pulses and a plurality of sensors for receiving reflections of said radiation pulses, which is arranged with respect to the spatial volume (1) to be monitored in such a way that image information and an additional three-dimensional spatial image can be produced on the basis of the received reflections, wherein the system is associated with computer hardware and/or computer software which is designed for digitising sensor data and for generating a height profile of the spatial volume (1) to be monitored via a reference plane on the basis of said sensor data, **characterized in that** coverage of the spatial volume from several sides is enabled together with at least one additional matrix distance measurement sensor, the height profile generated on the basis of the data of the at least two sensors above the reference plane can be compared by means of the computer hardware and/or computer software with standard models, e.g. an average person (3), and the system is designed, after the recognition of a standard model, to check whether a further standard model, e.g. a further average person (3), can be inserted into the remaining space.

2. A system according to claim 1, **characterized in that** the radiation pulses can be reflected by at least one object within the spatial volume (1), preferably at least one person (3), and that a calculation of the object contours is enabled from the respective individual propagation times of the radiation pulses from the emission by the emitter unit until the detection of the reflected radiation pulses by a connected computer unit (6).

3. A system according to one of the preceding claims, **characterized in that** 3D Time-of-Flight cameras, which are referred to as TOF cameras (2, 2'), are used as matrix distance measurement sensors.

4. A system according to claim 3, **characterized in that** CMOS/CCD image sensors (5, 5') are provided as sensors, by means of which light pulses are detected which are emitted by an emitter unit formed as an illumination unit of each TOF camera (2, 2') and reflected by illuminated objects within the spatial volume (1), preferably persons (3), and whose respective light propagation time from the emission of the light pulse by means of the illumination unit (4, 4') until the detection of the reflected light pulse by the CMOS/CCD image sensor (5, 5') can be determined, preferably in a pixel-precise manner.

5. A system according to one of the preceding claims, **characterized in that** each matrix distance measurement sensor comprises an infrared sensor and/or a laser sensor and/or an ultrasonic sensor, by means of which pulses are detected which are emitted by an emitter unit of each matrix distance measurement sensor and reflected by illuminated object or objects within the spatial volume (1), preferably persons (3), and whose respective individual propagation time from the emission of the pulse by means of the emitter unit until the detection of the reflected pulse by the infrared, laser, and/or ultrasonic sensor can be determined, preferably in a pixel-precise manner.

6. A system according to one of the claims 1 to 5, **characterized in that** the spatial volume (1) to be monitored is spatially delimited at least on one side, e.g. bounded or enclosed by at least one wall and/or by at least one barrier.

7. A system according to one of the preceding claims, **characterized in that** the field of vision of the at least one matrix distance measurement sensor is oriented in such a way that the boundaries of the field of vision on at least one side extend at least substantially parallel to the boundary of the spatial volume (1) to be monitored.

8. A system according to one of the preceding claims, **characterized in that** the field of vision of the at least one matrix distance measurement sensor is oriented in such a way that the boundaries of the field of vision on at least one side intersect a spatial boundary which is opposite the respective matrix distance measurement sensor and is disposed above a predeterminable head height.

9. A system according to one of the preceding claims, **characterized in that** a mirror arrangement is arranged in the field of vision of at least one of the matrix distance measurement sensors.

10. A walk-through portal, which is associated with a system according to one of the preceding claims in such a way that persons (3) and/or objects disposed within the portal region can be detected by means of the at least two matrix distance measurement sensors.

11. A method for monitoring a spatial volume (1) by means of a TOF camera (2, 2'), which overlooks the spatial volume (1) and from whose camera images a three-dimensional spatial image can be produced, **characterized in that** a second TOF camera (2, 2') also overlooks the spatial volume in such a way that spatial and/or object points which cannot be detected as a result of shadowing in the respective spatial image of a TOF camera (2, 2') are supplemented by means of spatial images of the other TOF camera (2, 2'), so that as a result of the spatial images of a plurality of TOF cameras (2, 2'), by combining the data of different TOF cameras (2, 2') into a single spatial image, a height profile of the spatial volume (1) which is as complete as possible is determined, the generated height profile is compared with standard models, e.g. such of an average person (3), and it is checked after the recognition of a standard model whether a further standard model, e.g. of a further average person (3), can be inserted into the remaining space.

12. A method according to claim 11, **characterized in that** the video data streams originating from the individual TOF cameras (2, 2') are digitised.

13. A method according to one of the claims 11 or 12, **characterized in that** the camera images of the individual TOF cameras (2, 2') are respectively corrected on the basis of calibration values.

14. A method according to one of the claims 11 to 13, **characterized in that** for a plurality of TOF cameras (2, 2') a respective individual common three-dimensional spatial image of the spatial region overlooked by the respective TOF camera (2, 2') is produced.

15. A method according to one of the claims 11 to 14, **characterized in that**, in conjunction with the evaluation of the generated height profiles, a contour evaluation for recognising defined body parts of persons (3) such as the head, shoulder or arm region, is additionally or alternatively carried out.

## Revendications

1. Dispositif pour surveiller le volume d'un local (1), comprenant un capteur de mesure de la distance matriciel avec une unité émettrice pour l'émission d'impulsions de rayonnement et plusieurs capteurs pour la réception de réflexions de ces impulsions de rayonnement, qui est disposé par rapport au volume du local (1) de telle manière que des informations d'image et une image du volume supplémentaire en trois dimensions puissent être créées à partir des réflexions reçues, le dispositif étant associé à un matériel d'ordinateur et/ou à un logiciel d'ordinateur capables de numériser des données de capteur et de créer un profil en hauteur du volume du local (1) à surveiller au-dessus d'un plan de référence sur la base de ces données de capteur,
**caractérisé en ce qu'**avec au moins un capteur de mesure de la distance matriciel supplémentaire, le volume du local peut être couvert de plusieurs côtés, le profil de hauteur créé à l'aide des données des au moins deux capteurs au-dessus du plan de référence peut être comparé à l'aide du matériel d'ordinateur et/ou du logiciel d'ordinateur à des modèles standard, par exemple à une personne moyenne (3), et le dispositif est conçu pour vérifier, après la reconnaissance d'un modèle standard, si un autre modèle standard, par exemple une autre personne moyenne (3), peut être introduit dans le volume restant.

2. Dispositif selon la revendication 1, **caractérisé en ce que** les impulsions de rayonnement peuvent être réfléchies par au moins un objet dans le volume du local (1), de préférence au moins une personne moyenne (3), et **en ce qu'**un calcul des contours de l'objet par une unité d'ordinateur (6) à partir des temps de parcours individuels respectifs des impulsions de rayonnement entre l'émission par l'unité d'émission et la détection de l'impulsion de rayonnement réfléchie est rendu possible.

3. Dispositif selon l'une des revendications précédentes, **caractérisé en ce que** les capteurs de mesure de la distance matriciels utilisés sont des caméras 3D à temps de vol, appelées ci-après caméras TDV (2, 2').

4. Dispositif selon la revendication 3, **caractérisé en ce que** les capteurs sont des capteurs d'image CMOS/CCD (5, 5') à l'aide desquels des impulsions lumineuses émises par une unité émettrice de chaque caméra TDV (2, 2') réalisée comme une unité d'éclairage (4, 4') et réfléchies par d'éventuels objets éclairés dans le volume du local (1), de préférence des personnes (3), sont détectées et leur temps de parcours lumineux individuel respectif entre l'émission de l'impulsion lumineuse au moyen de l'unité d'éclairage (4, 4') et la détection de l'impulsion lumineuse réfléchie par le capteur d'image CMOS/CCD (5, 5') peut être déterminé, de préférence avec une précision au pixel près.

5. Dispositif selon l'une des revendications précédentes, **caractérisé en ce que** chaque capteur de mesure de la distance matriciel comprend un capteur à infrarouges et/ou un capteur laser et/ou un capteur à ultrasons à l'aide duquel des impulsions émis par une unité émettrice de chaque capteur de mesure de la distance matriciel et réfléchie par le ou les objets dans le volume du local (1), de préférence des personnes (3), sont captées et leur temps de parcours individuel respectif entre l'émission de l'impulsion au moyen de l'unité émettrice et la détection de l'impulsion réfléchie par le capteur à infrarouges, laser et/ou à ultrasons peut être déterminé, de préférence avec une précision au pixel près.

6. Dispositif selon l'une des revendications 1 à 5, **caractérisé en ce que** le volume du local (1) à surveiller est délimité ou renfermé au moins d'un côté dans l'espace, par exemple par au moins une paroi et/ou au moins un barrage.

7. Dispositif selon l'une des revendications précédentes, **caractérisé en ce que** la zone de visée de l'au moins un capteur de mesure de la distance matriciel est orientée de telle manière que ses limites soient au moins pour l'essentiel parallèles, au moins sur un côté, à la délimitation du volume du local (1) à surveiller.

8. Dispositif selon l'une des revendications précédentes, **caractérisé en ce que** la zone de visée de l'au moins un capteur de mesure de la distance matriciel est orientée de telle façon que les limites de la zone de visée coupent au moins d'un côté une délimitation de l'espace faisant face au capteur de mesure de la distance matriciel au-dessus de la hauteur pouvant être prédéterminée d'une tête.

9. Dispositif selon l'une des revendications précédentes, **caractérisé en ce qu'**au moins une disposition de miroirs est disposée dans le champ de visée d'au moins un des capteurs de mesure de la distance matriciels.

10. Sas pour des personnes associé à un dispositif selon l'une des revendications précédentes, de telle manière que des personnes (3) et/ou des objets se trouvant dans le sas puissent être détectés à l'aide des au moins deux capteurs de mesure de la distance matriciels.

11. Procédé pour surveiller le volume d'un local (1) à l'aide d'une caméra TVF (2, 2'), qui couvre le volume du local (1) et dont les images permettent de créer une image en trois dimensions de l'espace,
**caractérisé en ce qu'**une deuxième caméra TVF (2, 2') couvre également le volume du local de telle manière que les points de l'espace et/ou des objets non acquis dans l'image de l'espace d'une caméra TVF (2, 2') soient complétés à l'aide des images de l'espace de l'autre caméra TVF (2, 2'), de sorte qu'à partir des images de l'espace de plusieurs caméras TVF (2, 2'), en réunissant les données de différentes caméras TVF (2, 2') en une seule image de l'espace, on puisse déterminer un profil de hauteur aussi complet que possible du volume du local (1) à surveiller, le profil de hauteur créé est comparé à des modèles standard, par exemple à une personne moyenne (3), et après la reconnaissance d'un modèle standard, on vérifie si un autre modèle standard, par exemple une autre personne moyenne (3), peut être introduite dans le volume restant.

12. Procédé selon la revendication 11, **caractérisé en ce que** les flux de données de vidéo provenant des différentes caméras TVF (2, 2') sont numérisés.

13. Procédé selon l'une des revendications 11 ou 12, **caractérisé en ce que** les images des différentes caméras TVF (2, 2') sont corrigées sur la base de valeurs d'étalonnage.

14. Procédé selon l'une des revendications 11 à 13, **caractérisé en ce que** pour plusieurs caméras TVF (2, 2'), une image de l'espace à trois dimensions commune de la partie de l'espace visible des caméras TVF (2, 2') correspondante est créée.

15. Procédé selon l'une des revendications 11 à 14, **caractérisé en ce qu'**en relation avec l'analyse des profils de hauteur créés, en complément ou en remplacement, une analyse des contours de parties du corps définies de personnes (3), par exemple de la région de la tête, des épaules ou des bras, est réalisée.
